# EUROPÄISCHE PATENTSCHRIFT

(11) **EP 0 341 614 B1**
(45) Veröffentlichungstag und Bekanntmachung des Hinweises auf die Patenterteilung: **21.04.1993**
(21) Anmeldenummer: 89108190.3
(22) Anmeldetag: 05.05.1989
(51) Int. Cl.: B01D 17/06, C02F 1/46

(54) **Vorrichtung zur elektrolytischen Trennung von Emulsionen**
Apparatus for the electrolytic separation of emulsions
Dispositif pour la séparation électrolytique d'émulsions

(30) Priorität: 11.05.1988 DE 3816226
(43) Veröffentlichungstag der Anmeldung: 15.11.1989
(73) Patentinhaber: SINTRA UMWELTSCHUTZTECHNIK GMBH, D-80807 München (DE)
(72) Erfinder: Jung, Ernst, Dr., D-8021 Icking (DE)
(74) Vertreter: Füchsle, Klaus, Dipl.-Ing.

(56) Entgegenhaltungen:
- DE-A- 2 238 844
- US-A- 2 399 289
- US-A- 3 944 478
- US-A- 4 236 990

## Beschreibung

Die Erfindung betrifft eine Vorrichtung zur Trennung von Emulsionen, insbesondere Öl/Wasser-Emulsionen durch elektrolytische Behandlung.

In vielen industriellen Prozessen ist heutzutage die Verwendung von Ölen, Emulgatoren, Dispersionsmitteln, Waschlaugen, Co-Polymeren und anderen durch Filter nicht zu entfernende Stoffe eine absolute Notwendigkeit. In fast allen Fällen kommen die verwendeten Stoffe mit Wasser in Berührung, was Probleme bei der Entsorgung des verunreinigten Wassers bereitet.

Obwohl das Problem der Auftrennung von belasteten Emulsionsabwässern seit vielen Jahren besteht und eine derartige Trennung auch mittels unterschiedlicher bekannter Methoden durchgeführt wird, ist durch die Entwicklung und Verwendung immer neuer Stoffe die Bereitstellung eines wirtschaftlichen Verfahrens immer schwieriger geworden.

Zu den vorgeschlagenen Verfahren gehört auch die elektrolytischen Abwasserbehandlung. Dabei besteht die Anode der dabei eingesetzten Elektrolyseeinheit aus einem Material, vorzugsweise aus Aluminium oder Eisen, das sich während der Elektrolyse unter Ionenbildung auflöst unddurch das dabei die in der Emulsion vorhandenen Stoffe flockierbar sind. An der Kathode wird im wesentlichen Wasserstoff gebildet, das die in der Emulsion gebildeten Flocken aufschwimmen läßt. Der in einem nachgeschalteten Trennbehälter aufschwimmende Schaum wird abgestreift, absinkende Bestandteile in einem weiteren Trennbehälter abgezogen und das geklärte Wasser dem Behälter entnommen.

Ein wesentliches Problem dieses Elektrolyseverfahrens ist darin zu sehen, daß der kontinuierliche, gleichmäßige Abtrag der Opferanode ohne Entfernen von Ablagerungen von der Oberfläche der Opferanode nicht möglich ist, da es durch diese Ablagerungen zu unzulässigen Änderungen der Höhe des Elektrodenspalts, sowie zu einer Passivierung der Opferanode kommt.

Eine Vorrichtung zum Abtragen der Passivierungsschicht ist in der DE-A-24 21 266 beschrieben. Die Kathode dieser Vorrichtung ruht mit ihrem Eigengewicht auf einer massiven Opferanode, wobei der Spalt zwischen der Kathode und der Opferanode durch Abstandselemente aufrecht erhalten wird. Diese Abstandselemente sind aus einem nicht leitenden, abriebfesten Material hergestellt und liegen auf der Stirnfläche der Opferanode auf. Die Zuführung des Abwassers zum Elektrodenspalt erfolgt durch eine zentrale Bohrung in der Kathode unter Druck. Bei dieser bekannten Vorrichtung werden die Ablagerungen auf der Anode dadurch verhindert, daß einerseits die Emulsion mit einer hohen Strömungsgeschwindigkeit durch den Spalt gepreßt wird und andererseits die Kathode in einer oszillierenden konzentrischen Drehbewegung relativ zur feststehenden Anode bewegt wird, so daß die Abstandselemente in der Kathode durch eine Schabwirkung die Ablagerungen auf der Oberfläche der Anode entfernen.

Trotz der genannten Maßnahmen wird bei der bekannten Vorrichrung die Opferanode im Bereich der Zuflußöffnung in der Kathode nicht wirksam von Ablagerungen befreit, weil bei einem ungleichen Abrieb an der Stirnfläche der Anode, z.B. aufgrund von Unregelmäßigkeiten an den Abstandselementen in den dadurch erzeugten Tälern in der Stirnfläche der Anode dort die passivierenden Ablagerungen nicht entfernt werden. Darüber hinaus kommt es im Bereich der Zuflußöffnung zu unkontrollierbaren Erodierungen, was Spaltungenauigkeiten im Kreisringspalt und unkontrollierbare Spaltströmungen zur Folge hat. Bei der Aufrechterhaltung optimaler Bedingungen im Kreisringspalt sind jedoch Unterschiede in der Größenordnung von 5/100 mm erheblich.

Der Erfindung liegt daher die Aufgabe zugrunde, eine Vorrichtung zur Trennung von Emulsionen zu schaffen, bei der die Passivierung der Oberfläche der Opferanode vollständig verhindert und die Opferanode gleichmäßig bei stets gleicher Spaltbreite abgetragen wird.

Gelöst wird diese Aufgabe durch eine Vorrichtung zur Trennung von Emulsionen, bei der durch Elektrolyse Metallionen zur Bindung der emulgierten Stoffe in die Emulsion eingebracht werden, mit einer rohrförmigen Opferanode, mit einer Kathode, die einer Stirnfläche der Opferanode unter Bildung eines Spaltes gegenüberliegt, durch den die Emulsion hindurchtritt, mit an der Kathode angeordneten Abstandselementen, an denen zur Bestimmung der Höhe des Spaltes die Stirnfläche der Opferanode anliegt, und mit einem Antrieb, mit dem eine Drehbewegung zwischen der Kathode und der Opferanode um deren Achse erzeugt wird, bei der erfindungsgemäß der Antrieb mit der rohrförmigen Opferanode mittels einer Kupplung gekuppelt ist, bei der ein zur Drehachse radiales Spiel zwischen Antrieb und Opferanode gegeben ist, so daß in definierten Grenzen eine freie Radialbewegung zwischen Opferanode und Kathode möglich ist, die die Drehbewegung zwischen Opferanode und Kathode überlagert.

Durch die erfindungsgemäße Vorrichtung wird sichergestellt, daß etwaige stellenweise auftretende Beschädigungen der Abstandselemente nicht durch die Schabwirkung auf die Oberfläche der Opferanode abgebildet werden, da die in der Spaltebene zugelassene radiale Bewegung der angetriebenen Elektrode, die sich der konzentrischen Bewegung überlagert stets einen gleichmäßigen Abtrag der Opferanode gewährleistet.

In einer ersten erfindungsgemäßen Ausführungsform ist der Antrieb ortsfest und es wird die Opferanode angetrieben, die vertikal über der Kathode angeordnet ist und mit ihrem Eigengewicht auf den Abstandselementen der Kathode aufliegt. Der Antrieb ist mit der Opferanode über eine in die Opferanode hineinragende Hohlwelle gekuppelt, an der ein Kollektorring starr befestigt ist.

In einer zweiten erfindungsgemäßen Ausführungsform ist hingegen die Opferanode ortsfest angeordnet und es wird die Kathode angetrieben, die oberhalb der Opferanode liegt und die unter ihrem Eigengewicht und dem des Antriebs mit ihren Abstandselementen auf der Stirnfläche der Opferanode aufliegt. Der Antrieb ist dabeiauf einer Grundplatte angeordnet, die mit der Opferanode axial beweglich über eine Achse verbunden ist, auf der die Kathode drehbar angeordnet ist. Ein Kollektorring ist ebenfalls drehbar auf der Achse gelagert und gemeinsam mit der Kathode mit dem Antrieb gekuppelt.

Bei den beiden Ausführungsformen erfolgt die unmittelbare Kupplung zwischen dem Antrieb und der Opferanode durch einen zur Drehachse senkrecht angeordneten Kupplungsstern, der mit seinen Vorsprüngen in axiale Nuten der inneren Mantelfläche der rohrförmigen Opferanode mit radialem Spiel eingreift.

Die unmittelbare Kupplung zwischen Antrieb und Opferanode erfolgt in einer anderen Variante durch Stangen, die in axiale Bohrungen in der Wand der Opferanode mit radialem Spiel eingreifen.

Weitere Ausgestaltungen der erfindungsgemäßen Vorrichtung ergeben sich im übrigen aus den Unteransprüchen.

Die Erfindung wird im folgenden anhand der schematisch ausgeführten Zeichnungen näher erläutert.

Dabei zeigt:
- Fig. 1: einen Längsschnitt durch die erste Ausführungsform der erfindungsgemäßen Vorrichtung,
- Fig. 2: eine perspektivische Ansicht der erfindungsgemäßen Vorrichtung aus Fig. 1,
- Fig. 3a - 3c: unterschiedliche Anordnungen und Ausgestaltungen der Abstandselemente in der Kathode,
- Fig. 4: einen Längsschnitt durch die zweite Ausführungsform der erfindungsgemäßen Vorrichtung, und
- Fig. 5: eine perspektivische Ansicht der Vorrichtung aus Fig. 4.

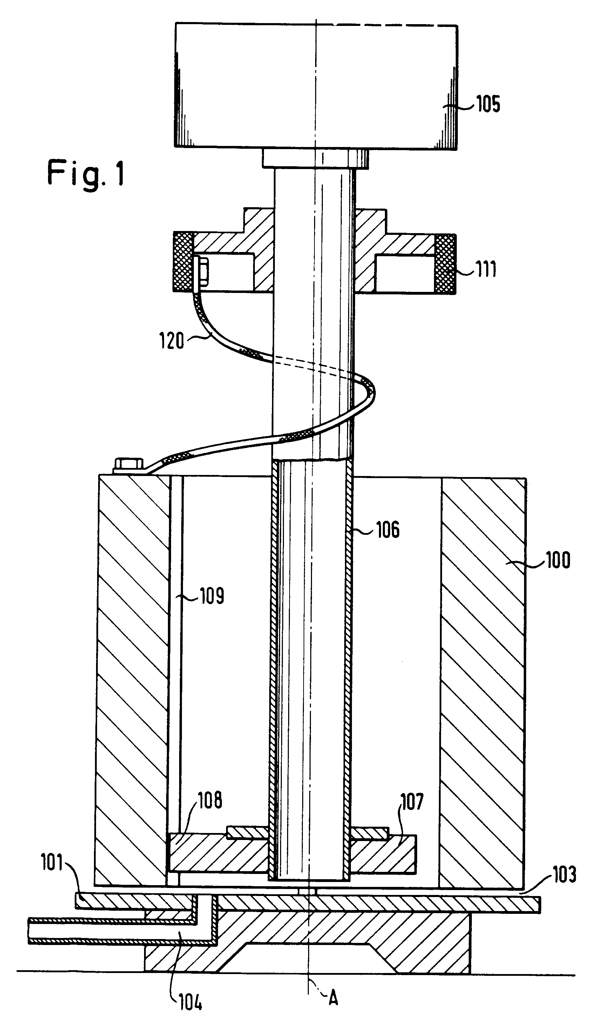

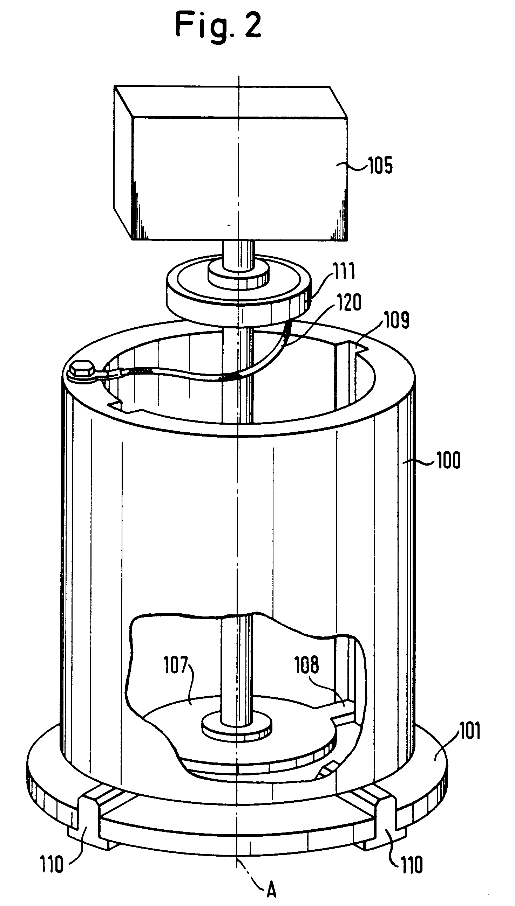

In den Fig. 1 und 2 ist ein erstes Ausführungsbeispiel für eine Elektrolysevorrichtung gemäß der Erfindung dargestellt, die eine rohrförmige Opferanode 100 und eine ihr gegenüberliegende ebene Kathode 101 aufweist. Zwischen der Stirnfläche der rohrförmigen Opferanode 100 und der ebenen Kathode 101 besteht ein Spalt 103 mit konstantem Abstand, durch den die Emulsion aus dem Inneren der rohrförmigen Opferanode 100 hindurchtritt. Zugeführt wird die Emulsion durch einen Zufluß 104 in der Kathode, so daß sich im Inneren der rohrförmigen Opferanode 100 ein Flüssigkeitsspiegel mit entsprechender Höhe einstellt. Der Zufluß der Emulsion kann auch von oben durch die obere Öffnung der Opferanode erfolgen.

Ein Antrieb 105 ermöglicht eine Drehbewegung zwischen der rohrförmigen Opferanode 100 und der feststehenden Kathode 101. Dazu wird die Antriebsbewegung vom Antrieb 105 über eine Hohlwelle 106 auf eine Scheibe 107 übertragen, die auf ihrem Umfang Vorsprünge 108 aufweist, die in entsprechende in Achsrichtung verlaufende Nuten 109 in der Innenwand der rohrförmigen Opferanode 100 eingreifen. Dieser Eingriff zwischen den Vorsprüngen 108 und den Nuten 109 ist erfindungsgemäß mit radialem Spiel ausgebildet, so daß die rohrförmige Opferanode 100 um ihre Längsachse eine gewisse Radialbewegung ausführen kann, die sich der Drehbewegung überlagert.

Der Antrieb kann nach einer nicht dargestellten Variante mit Hilfe von Stangen in Bohrungen eingreifen, die in der Wandung der rohrförmigen Opferanode vorgesehen sind und die sich in Längsrichtung der Opferanode erstrecken. Auch bei dieser Ausgestaltung bleibt durch geeignete Dimensionierung der Bohrung und der Stäbe der rohrförmigen Opferanode ein definiertes radiales Spiel, so daß die Opferanode mit einer ausreichenden radialen Bewegungsfreiheit auf den Abstandselementen aufzuliegen und so an ihrer Stirnfläche durch die Schabwirkung gleichmäßig abgetragen werden kann.

Die rohrförmigen Opferanode 100 wird, wie schon erwähnt, durch Abstandselemente 110, die in der ebenen Kathode 101 vorgesehen sind, in entsprechendem Abstand zur Kathode gehalten. Auf diesen Abstandselementen 110 ruht die rohrförmige Opferanode 100 aufgrund ihres Eigengewichts.

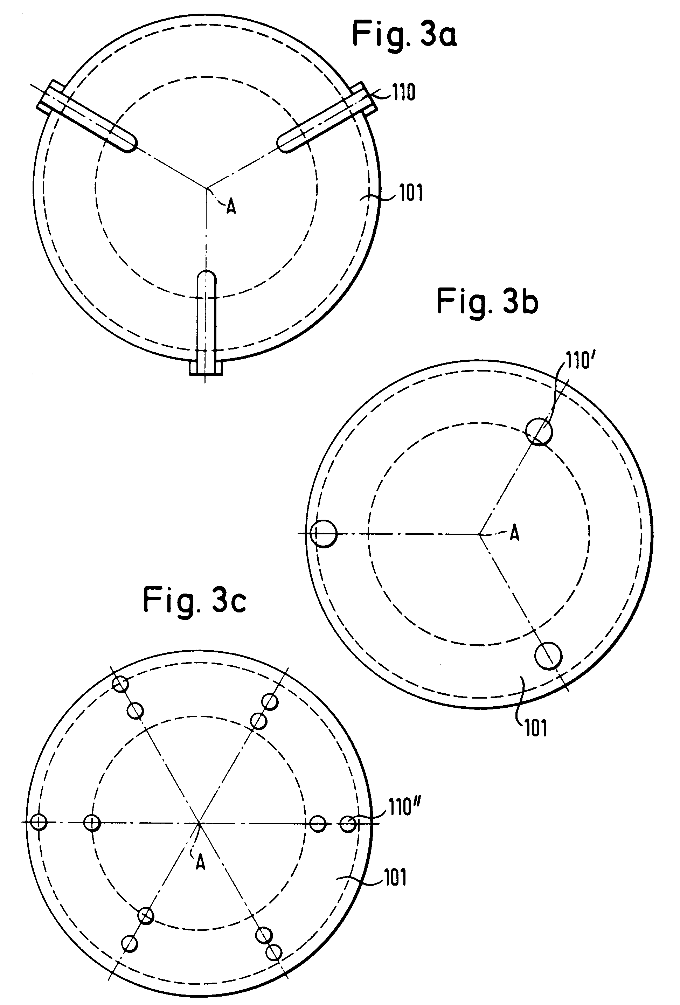

In den Fig. 3a bis 3c sind verschiedene Ausgestaltungen der Abstandselemente dargestellt, die die Stirnfläche der Opferanode (gestrichelt angedeutet) radial deckend überstreichen. Dabei kann, wie in Fig. 3a gezeigt, das Abstandselement 110 selbst radial deckend sein und sich über die gesamte Wanddicke der rohrförmigen Opferanode erstrecken. Der gleiche Effekt kann im Verlauf einer Umdrehung der Opferanode durch einzelne Abstandselemente 110′, 110˝, die einzeln nicht radial deckend die Stirnfläche überstreichen, in Folge ihrer versetzten Anordnung erzielt werden, wie dies in den Fig. 3b und 3c deutlich gemacht ist.

In der Spaltebene lassen vorteilhaft die Abstandselemente 110, 110′, 110˝ die erfindungswesentliche Radialbewegung der Opferanode zu, indem sie zwar radial deckend die Opferanode von Ablagerungen freihalten, aber die Bewegungsfreiheit nicht einschränken. Da die rohrförmige Opferanode 100 auf den Abstandselementen aufgrund ihres Eigengewichts ruht, dienen die Abstandselemente gleichzeitig als Abstreifelemente, die die Stirnfläche der rohrförmigen Opferanode von Passivierungsschichten freihält. Dieser Effekt wird verstärkt durch die Tatsache, daß die Oberfläche der Abstandselemente so ausgebildet ist, daß die Berührung im wesentlichen entlang einer radialen Linie stattfindet.

Die Abstandselemente sind in der feststehenden Kathode 101 so befestigt, daß sie leicht auszuwechseln sind und der Spalt auf einfache Art nachstellbar ist. So sind die Abstandselemente 110, dargestellt in Fig. 3a in einer entsprechenden Ausnehmung in der Kathode 101 geführt und können radial nach außen aus diesen Ausnehmungen herausgezogen werden. Die zylindrischen Abstandselemente 110′ und 110˝, dargestellt in Fig. 3b und 3c sind durch entsprechende Bohrungen in der Kathode 101 hindurchgesteckt und können axial ebenfalls leicht ausgetauscht werden.

Erfindungsgemäß trägt das kontrollierte radiale Spiel der rohrförmigen Opferanode 100 in großem Maße zu einem gleichmäßigen Abtragen der Stirnfläche und damit zu einem gleichmäßigen Verbrauch der Opferanode bei, wobei der Spalt 103 stets eine konstante, durch die Abstandselemente festgelegte Größe beibehält. Die von der Stirnfläche abgetragenen Rückstände werden durch die Emulsion aus dem Spalt gespült.

In dem in den Fig. 1 und 2 dargestellten Ausführungsbeispiel der erfindungsgemäßen Vorrichtung ist vorgesehen, daß mit Hilfe einer Kontaktzange über einen Kollektorring 111 die Stromzuführung erfolgt. Der Kollektorring 111 wird wie die Opferanode 100 durch den Antrieb 105 angetrieben und dreht sich synchron mit der Opferanode 100. Der rotierende Kollektorring 111 ist mit der Opferanode 100 durch einen flexiblen Gewebeleiter 120 elekrisch verbunden.

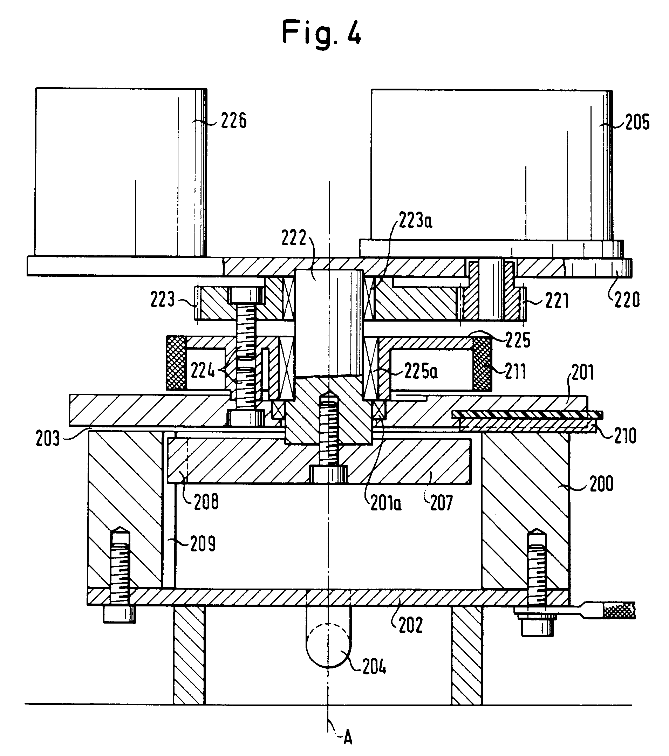

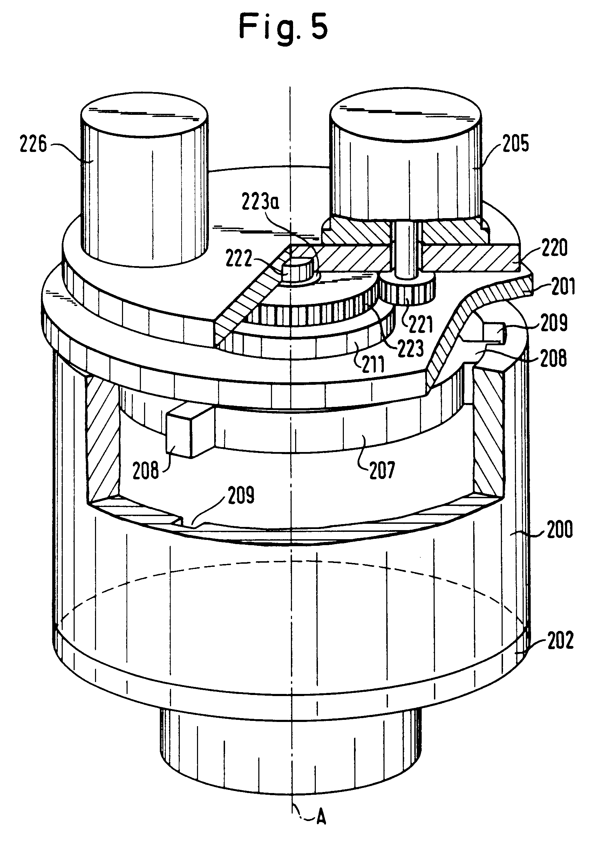

In den Fig. 4 und 5 ist ein zweites Ausführungsbeispiel der erfindungsgemäßen Vorrichtung dargestellt, die eine stehende rohrförmige Opferanode 200 und eine ihr gegenüberliegende drehende ebene Kathode 201 aufweist. Zwischen der Stirnfläche der rohrförmigen Opferanode 200 und der ebenen Kathode 201 besteht ein Spalt 203 mit konstantem Abstand, der durch Abstandselemente 210 aufrecht erhalten wird und durch den die Emulsion aus dem Inneren der rohrförmigen Opferanode 200 hindurchtritt. Zugeführt wird die Emulsion durch einen Zufluß 204 in einer die rohrförmige Opferanode 200 nach unten abschließenden, ebenen Platte 202. Da die Kathode 201 unter ihrem Eigengewicht und dem Gewicht des weiter unten beschriebenen Antriebs auf der rohrförmigen Opferanode 200 aufliegt, bildet sich im Inneren der rohrförmigen Opferanode ein durch die ebene Platte 202 und durch die Kathode 201 abgeschlossener Hohlraum. Die Emulsion kann lediglich durch den Spalt 203 aus dem Hohlraum entweichen, so daß es möglich ist, im Spalt eine höhere Strömungsgeschwindigkeit der Emulsion zu erzielen, wenn die Emulsion mit ausreichendem Druck zugeführt wird.

Die Kathode 201 liegt vertikal oberhalb der Opferanode und wird durch den Antrieb 205 angetrieben. Der Antrieb ist auf einer Grundplatte 220 angeordnet, die über eine Achse 222 axial beweglich mit der Opferanode verbunden ist. Diese Verbindung wird durch einen Kupplungsstern 207 bewerkstelligt, der mit seinen Vorsprüngen 208 in axiale Nuten 209 in der inneren Mantelfläche der rohrförmigen Opferanode eingreift. Die starre Verbindung zwischen der Grundplatte 220, Achse 222 und Kupplungsstern 207 bewirkt, daß sich das Drehmoment, das durch den Antrieb 205 aufgebracht wird, in den Längsnuten 209 der feststehenden Opferanode 200 abstützt.

Das Antriebsritzel 221 des Antriebs 205 treibt ein Stirnrad 223 an, das über ein Lager 223a drehbar auf der Achse 222 gelagert ist. Das Stirnrad 223 ist über Bolzen 224 mit einer isolierenden Scheibe 225 verbunden, die über ein Lager 225a drehbar auf der Achse 222 angeordnet ist und die auf ihrem Umfang einen Kollektorring 211 trägt, über den mit Hilfe einer Kontaktzange die Stromzuführung erfolgt. Über die Bolzen 224 ist die Scheibe 225 mit der ebenen Kathode 201 verbunden, die über ein Lager 201a auf der Achse 222 gelagert ist. Durch das Antriebsritzel 221 angetrieben, rotieren das Stirnrad 223, die isolierende Scheibe 225 und die ebene Kathode 201 synchron.

Die Antriebsvorrichtung und die Kathode können zusammen von oben auf die Opferanode 200 aufgesetzt werden und ruhen während des Betriebs mit dem Eigengewicht der Kathode 201 sowie des Antriebs 205 und der die Bewegung übertragenden Teile auf der Stirnfläche der Opferanode. Hinzu kommt das Gewicht eines Gegengewichts 226, das in Bezug auf die Drehachse A die einseitige Belastung der Grundplatte 220 durch den Antrieb 205 ausgleicht.

Durch das Gesamtgewicht der auf der rohrförmigen Opferanode ruhenden Teile ist es möglich, daß die Emulsion, wie bereits zuvor erwähnt, unter Druck in den Innenraum der Opferanode 200 geleitet werden kann, so daß die Emulsion mit einer höheren Strömungsgeschwindigkeit durch den Spalt 203 strömt. Erfindungsgemäß trägt die kontrollierte Radialbewegung der Kathode 201, das durch entsprechende Ausgestaltung des Spiels zwischen den Nuten 209 der Opferanode 200 und den Vorsprüngen 208 des Kupplungssterns 207 erzielt wird, in großem Maße zu einem gleichmäßigen Abtrag der Stirnfläche und damit zu einem gleichmäßigen Verbrauch der Opferanode bei. Die Abstandselemente 210 legen eine konstante Größe des Spalts 203 fest, die während des Berriebs beibehalten wird. Die von der Stirnfläche abgetragenen Rückstände werden durch die Emulsion aus dem Elektrodenspalt gespült.

Die in der Fig. 4 dargestellten Abstandselemente 210 können radial aus der Kathode 201 herausgezogen werden und sind im wesentlichen wie die in der Fig. 3a dargestellten Abstandselemente ausgebildet, die sich radial deckend über die gesamte Wanddicke der rohrförmigen Opferanode erstrecken. Der Einsatz der entsprechend den Fig. 3b und 3c umgebildeten Abstandselemente, die einzeln nicht radial deckend sind, die aber in Folge der Versetzung bei einer Umdrehung der Kathode 201 denselben Effekt erzielen, ist beim zweiten Ausführungsbeispiel der erfindungsgemäßen Vorrichtung ebenfalls möglich.

## Patentansprüche

1. Vorrichtung zum Trennen von Emulsionen, bei der durch Elektrolyse Metallionen zur Bindung der emulgierten Stoffe in die Emulsion eingebracht werden, mit
- einer rohrförmigen Opferanode (100;200),
- einer Kathode (101; 201), die einer Stirnfläche der Opferanode unter Bildung eines Spaltes (103;203) gegenüberliegt, durch den die Emulsion hindurchtritt,
- an der Kathode angeordneten Abstandselementen (110;210), an denen zur Bestimmung der Höhe des Spaltes die Stirnfläche der Opferanode anliegt, und
- einem Antrieb (105; 205), mit dem eine Drehbewegung zwischen der Kathode und der Opferanode um deren Achse (A) erzeugt wird,
dadurch **gekennzeichnet,**
- daß der Antrieb (105; 205) mit der rohrförmigen Opferanode (100; 200) mittels einer Kupplung gekuppelt ist, bei der ein zur Drehachse radiales Spiel zwischen Antrieb und Opferanode gegeben ist, so daß in definierten Grenzen eine freie Radialbewegung zwischen Opferanode und Kathode möglich ist, die die Drehbewegung zwischen Opferanode und Kathode überlagert, und bei der eine axiale Bewegung zwischen der Opferanode und dem Antrieb zugelassen wird.

2. Vorrichtung nach Anspruch 1,
dadurch **gekennzeichnet,** daß der Antrieb (105) ortsfest ist und die Opferanode (100) angetrieben wird.

3. Vorrichtung nach Anspruch 2,
dadurch **gekennzeichnet,** daß die Opferanode (100) vertikal über der Kathode (101) angeordnet ist und mit ihrem Eigengewicht auf den Abstandselementen (110) der Kathode aufliegt.

4. Vorrichtung nach Anspruch 2 oder 3,
dadurch **gekennzeichnet,** daß die Antriebsvorrichtung (105) die rohrförmige Opferanode (100) über eine Hohlwelle (106) antreibt, die in die Opferanode hineinragt.

5. Vorrichtung nach Anspruch 4,
dadurch **gekennzeichnet,** daß auf der Hohlwelle (106) ein Kollektorring (111) fest mit der Hohlwelle verbunden angeordnet ist.

6. Vorrichtung nach Anspruch 1,
dadurch **gekennzeichnet,**
- daß die Opferanode (200) ortsfest angeordnet ist,
- daß die Kathode (201) vertikal oberhalb der Opferanode liegt und angetrieben wird, und
- daß die Kathode unter ihrem Eigengewicht und dem des Antriebs (205) mit ihren Abstandselementen (210) auf der Stirnfläche der Opferanode aufliegt (Fig. 4 und 5).

7. Vorrichtung nach Anspruch 6,
dadurch **gekennzeichnet,**
- daß der Antrieb (205)auf einer Grundplatte (220) angeordnet ist,
- daß die Grundplatte über einer Achse (222) axial beweglich mit der Opferanode (200) verbunden ist, und
- daß die Kathode (201) auf der Achse (222) drehbar angeordnet ist.

8. Vorrichtung nach Anspruch 7,
dadurch **gekennzeichnet,** daß auf der Achse (222) ein Kollektorring (211) drehbar gelagert ist und dieser gemeinsam mit der Kathode (201) mit dem Antrieb (205) gekuppelt ist.

9. Vorrichtung nach einem der vorhergehenden Ansprüche,
dadurch **gekennzeichnet,** daß die unmittelbare Kupplung zwischen Antrieb (105;205) und Opferanode (100;200) durch einen zur Drehachse (A) senkrecht angeordneten Kupplungsstern (107;207) erfolgt, der mit seinen Vorsprüngen (108;208) in axialen Nuten (109;209) in der inneren Mantelfläche der rohrförmigen Opferanode mit radialem Spiel eingreift.

10. Vorrichtung nach einem der Ansprüche 1 bis 4,
dadurch **gekennzeichnet,** daß die unmittelbare Kupplung zwischen Antrieb und Opferanode durch Stangen erfolgt, die in axiale Bohrungen in der Wand der Opferanode mit radialem Spiel eingreifen.

11. Vorrichtung nach einem der vorhergehenden Ansprüche,
dadurch **gekennzeichnet,** daß die Abstandselemente (110, 110', 110''; 210) so ausgebildet sind, daß ein Linienkontakt mit der Stirnfläche der Opferanode (100; 200) stattfindet.

12. Vorrichtung nach einem der vorhergehenden Ansprüche,
dadurch **gekennzeichnet,** daß die Abstandselemente (110) radial verlaufend sich über die gesamte Wanddicke der rohrförmigen Opferanode erstrecken.

13. Vorrichtung nach einem der Ansprüche 1 bis 11,
dadurch **gekennzeichnet,**
- daß jedes Abstandselement (110', 110'') in seiner Radialerstreckung kürzer ist als die Wanddicke der Opferanode, und
- daß mehrere Abstandselemente radial so versetzt sind, daß sie gemeinsam die gesamte Wanddicke der Opferanode überdecken.

## Claims

1. Apparatus for the separation of emulsions, in which metal ions for binding the emulsified substances are introduced into the emulsion by electrolysis, with
- a tubular sacrificial anode (100; 200),
- a cathode (101; 201) which is located opposite an end face of the sacrificial anode, forming a gap (103; 203) through which the emulsion passes,
- spacer elements (110; 210) which are arranged on the cathode and which the end face of the sacrificial anode contacts to determine the height of the gap, and
- a drive (105; 205) with which a rotary movement is produced between the cathode and the sacrificial anode about the axis (A) thereof,
characterised in that
- the drive (105; 205) is coupled to the tubular sacrificial anode (100; 200) by means of a coupling, in which there is a radial clearance relative to the axis of rotation between drive and sacrificial anode, so that within predefined limits a free radial movement is possible between sacrificial anode and cathode, which is superimposed on the rotary movement between sacrificial anode and cathode, and in which an axial movement is permitted between the sacrificial anode and the drive.

2. Apparatus according to claim 1, characterised in that the drive (105) is stationary and the sacrificial anode (100) is driven.

3. Apparatus according to claim 2, characterised in that the sacrificial anode (100) is arranged vertically above the cathode (101) and rests by its own weight on the spacer elements (110) of the cathode.

4. Apparatus according to claim 2 or 3, characterised in that the drive mechanism (105) drives the tubular sacrificial anode (100) by a hollow shaft (106) which extends into the sacrificial anode.

5. Apparatus according to claim 4, characterised in that a commutator ring (111) is mounted on the hollow shaft (106), rigidly connected to the hollow shaft.

6. Apparatus according to claim 1, characterised in that
- the sacrificial anode (200) is mounted stationarily,
- the cathode (201) is located vertically above the sacrificial anode and driven, and
- the cathode rests by its own weight and that of the drive (205) with its spacer elements (210) on the end face of the sacrificial anode (Figs. 4 and 5).

7. Apparatus according to claim 6, characterised in that
- the drive (205) is arranged on a base plate (220),
- the base plate is connected to the sacrificial anode (200) axially movably by a shaft (222), and
- the cathode (201) is mounted rotatably on the shaft (222).

8. Apparatus according to claim 7, characterised in that a commutator ring (211) is mounted rotatably on the shaft (222) and, together with the cathode (201), coupled to the drive (205).

9. Apparatus according to any of the preceding claims, characterised in that direct coupling between the drive (105; 205) and the sacrificial anode (100; 200) takes place by a coupling spider (107; 207) which is arranged perpendicularly to the axis of rotation (A) and which engages by its projections (108; 208) in axial grooves (109; 209) in the inner peripheral surface of the tubular sacrificial anode with radial play.

10. Apparatus according to any of claims 1 to 4, characterised in that direct coupling between drive and sacrificial anode takes place by rods which engage in axial bores in the wall of the sacrificial anode with radial play.

11. Apparatus according to any of the preceding claims, characterised in that the spacer elements (110, 110', 110''; 210) are constructed in such a way that linear contact with the end face of the sacrificial anode (100; 200) takes place.

12. Apparatus according to any of the preceding claims, characterised in that the spacer elements (110) extend radially across the whole wall thickness of the tubular sacrificial anode.

13. Apparatus according to any of claims 1 to 11, characterised in that
- each spacer element (110', 110'') is shorter in its radial dimension than the wall thickness of the sacrificial anode, and
- several spacer elements are radially offset in such a way that together they cover the whole wall thickness of the sacrificial anode.

## Revendications

1. Dispositif de séparation d'émulsions, dans lequel on introduit par électrolyse des ions métalliques dans l'émulsion en vue de combiner les substances émulsifiées, avec :
- une anode réactive tubulaire (100; 200),
- une cathode (101; 201), placée en face d'une face frontale de l'anode réactive, en formant un interstice (103; 203) au travers duquel passe l'émulsion,
- des éléments d'écartement (110; 210) disposés sur la cathode, sur lequel appuie la surface frontale de l'anode réactive en vue de déterminer la valeur de l'interstice et,
- un entraînement (105; 205) à l'aide duquel est produit un mouvement rotatif entre la cathode et l'anode réactive, autour de son axe (A),
caractérisé en ce que
- l'entraînement (105; 205) est couplé à l'anode réactive tubulaire (100; 200) au moyen d'un accouplement, pour lequel est laissé un jeu radial par rapport à l'axe de rotation, entre l'entraînement et l'anode réactive de telle façon qu'un mouvement radial libre entre anode réactive et cathode soit possible dans des limites définies, en se superposant au mouvement de rotation entre anode réactive et cathode et pour lequel un mouvement axial est admis entre l'anode réactive et l'entraînement.

2. Dispositif selon la revendication 1, caractérisé en ce que l'entraînement (105) est localement fixe et l'anode réactive (100) est entraînée.

3. Dispositif selon la revendication 2, caractérisé en ce que l'anode réactive (100) est disposée verticalement au dessus de la cathode (101) et appuie par son poids propre sur les éléments (110) de la cathode.

4. Dispositif selon la revendication 2 ou 3, caractérisé en ce que le dispositif d'entraînement (105) entraîne l'anode réactive tubulaire (100) par l'intermédiaire d'un arbre creux (106) pénétrant dans l'anode réactive.

5. Dispositif selon la revendication 4, caractérisé en ce que sur l'arbre creux (106) est disposée une bague collectrice (111)reliée rigidement à l'arbre creux.

6. Dispositif selon la revendication 1, caractérisé en ce que :
- l'anode réactive (200) est localement fixe,
- la cathode (201) est disposée verticalement au dessus de l'anode réactive et est entraînée, et,
- la cathode appuie par son poids propre et celui de l'entraînement (205), à l'aide de ses éléments d'écartement (210), sur la surface frontale de l'anode réactive (figures 4 et 5).

7. Dispositif selon la revendication 6, caractérisé en ce que :
- l'entraînement (205) est disposé sur une plaque de base (220),
- la plaque de base est reliée de façon axialement mobile à l'anode réactive (200), par l'intermédiaire d'un axe (222) et,
- la cathode (201) est montée à rotation sur l'axe (222).

8. Dispositif selon la revendication 7, caractérisé en ce que sur l'axe (222) est montée en rotation une bague collectrice (211), couplée à l'entraînement (205), conjointement avec la cathode (201).

9. Dispositif selon l'une des revendications précédentes, caractérisé en ce que le couplage direct entre entraînement (105; 205) et anode réactive (100; 200) s'effectue au moyen d'une étoile d'accouplement (107; 207), disposée perpendiculairement à l'axe de rotation (A) et s'engageant avec un jeu radial, par ses saillies (108; 208), dans des rainures axiales (109; 209) ménagées dans la surface d'enveloppe intérieure de l'anode réactive tubulaire.

10. Dispositif selon l'une des revendications 1 à 4, caractérisé en ce que le couplage direct entre entrainment et anode reactive s'effectue au moyen de tiges s'engageant avec un jeu radial dans des perçages axiaux ménagés dans la paroi de l'anode réactive.

11. Dispositif selon l'une des revendications précédentes, caractérisé en ce que les éléments d'écartement (110, 110', 110'', 210) sont réalisés de telle façon qu'il y un contact linéaire avec la surface frontale de l'anode réactive (100; 200).

12. Dispositif selon l'une des revendications précédentes, caractérisé en ce que les éléments d'écartement (110) s'étendent radialement sur la totalité de l'épaisseur de paroi de l'anode réactive tubulaire.

13. Dispositif selon l'une des revendications 1 à 11, caractérisé en ce que :
- chaque éléments d'écartement (110', 110'') présentent une étendue radiale inférieure à l'épaisseur de paroi de l'anode réactive et
- plusieurs éléments d'écartement sont décalés radialement de telle façon qu'ils recouvrent globalement l'ensemble de l'épaisseur de paroi de l'anode réactive.
